# EUROPEAN PATENT SPECIFICATION

(11) **EP 4 144 426 B1**
(45) Date of publication and mention of the grant of the patent: **04.12.2024**
(21) Application number: 20933388.9
(22) Date of filing: 21.10.2020
(51) Int. Cl.: B01D 39/10, B01J 7/00, B60R 21/264

(54) **FILTER MOLDED BODY FOR GAS GENERATOR, AND GAS GENERATOR**
FILTERFORMKÖRPER FÜR GASGENERATOR UND GASGENERATOR
CORPS MOULÉ DE FILTRE POUR GÉNÉRATEUR DE GAZ ET GÉNÉRATEUR DE GAZ

(30) Priority: 28.04.2020 JP 2020079045
(43) Date of publication of application: 08.03.2023
(73) Proprietor: Daicel Corporation, Osaka 530-0011 (JP)
(72) Inventor: IZUMA, Toshihiro, Tokyo 108-8230 (JP)
(74) Representative: Grünecker Patent- und Rechtsanwälte PartG mbB
(86) International application number: PCT/JP2020/039547
(87) International publication number: WO 2021/220530

(56) References cited:
- WO-A1-2019/198584
- CN-A- 108 176 135
- JP-A- 2002 301 317
- JP-A- 2009 190 656
- JP-A- 2014 237 389
- JP-A- 2018 043 621
- JP-A- H08 229 322
- US-A1- 2014 250 847
- US-A1- 2018 093 212

## Description

### Technical Field

The present invention relates to a filter molded article for a gas generator and the gas generator.

### Background Art

A known widely-used gas generator fills a gas generating agent in a combustion chamber formed in a housing, burns the gas generating agent by an igniter to generate combustion gas, and discharges the combustion gas to the exterior from a gas discharge port provided in the housing. Further, to cool the generated combustion gas and trap residues in such a gas generator, a cylindrical filter molded article is typically included.

In relation to this, a filter molded article for improving cooling performance and filtering performance of combustion gas has also been proposed (see Patent Documents 1 and 2, and the like, for example). For example, Patent Document 1 discloses a filter for a gas generator that has a substantially cylindrical hollow shape and is formed of a winding body of a metal wire. The metal wire is formed of a long member in which a cross-sectional shape orthogonal to an extending direction of the metal wire is a V shape. A V-shaped groove defined by the metal wire is directed to a hollow portion side of the filter for the gas generator. Further, Patent Document 2 discloses a molded article for a filter in which one or a plurality of metal wires are combined and a radial protruding portion is formed on a surface of the metal wire.

### Citation List

### Patent Document

Patent Document 1: JP 2018-43621 A
Patent Document 2: JP 2009-190656 A
Patent Document 3: JP H08 229322 A
Patent Document 4: CN 108 176 135 A
Patent Document 5: US 2014/250847 A1
Patent Document 6: WO 2019/198584 A1
Patent Document 7: JP 2014 237389 A

### Summary of Invention

### Technical Problem

However, in a tubular filter molded article, it is typically necessary to prevent a metal wire from being unwound by sintering the metal wire after the metal wire is wound around a core material. Further, when a gas generator is manufactured, the filter molded article is sandwiched between a top plate and a bottom plate of a housing and assembled in the housing in a compressed state. Thus, when shape retention (rigidity) of the filter molded article is insufficient, wires forming the filter molded article may be unwound.

In contrast, the filter for the gas generator described in Patent Document 1 has a small contact area between wires overlapping each other in a radial direction of a filter molded article. Thus, sintering force between the wires forming the filter molded article may be reduced, and shape retention (rigidity) of the filter molded article may become insufficient. Further, in the filter for the gas generator described in Patent Document 1, it is necessary to roll a metal element wire having a circular cross-section into a bent plate shape having a V-shaped cross-section in course of manufacture of the filter, and thus it cannot be said that manufacturing is easy.

In the filter for a gas generator described in Patent Document 2, a plurality of the protruding portions radially protrude on the surface of the metal wire. Thus, a contact area is less likely to be ensured due to contact between the protruding portions of the metal wire overlapping each other in a radial direction of the filter for the gas generator, and sintering force between the wires may become insufficient.

A technology of the present disclosure has been made in view of the above-described circumstances, and an object of the present disclosure is to provide a technology related to a filter molded article for a gas generator having excellent combustion gas filtering and cooling effects and also having more excellent shape retention and manufacturing ease than found in the related art.

### Solution to Problem

To solve the above problem, the technology according to the present disclosure adopts the following configuration. In other words, the technology according to the present disclosure is a filter molded article for a gas generator that is housed in an outer shell container of the gas generator, and the filter molded article includes: a peripheral wall portion that is formed of a winding body of a filter wire and has a cylindrical hollow shape, the filter wire including a groove portion that is formed in one place in a circumferential direction of a metal wire having a circular or elliptical transverse cross-section and that extends along an extending direction of the metal wire, and including a circumferential surface formed in a portion other than the groove portion; a gas inflow surface that is formed of one surface from among an inner peripheral surface of the peripheral wall portion and an outer peripheral surface of the peripheral wall portion, and that is through which gas flows into the peripheral wall portion; and a gas outflow surface that is formed of the other surface from among the inner peripheral surface of the peripheral wall portion and the outer peripheral surface of the peripheral wall portion, and that is through which gas flows from the peripheral wall portion, wherein the groove portion is oriented opening toward the gas inflow surface in the peripheral wall portion.

In the filter molded article for the gas generator having the structure described above, combustion gas flows from the gas inflow surface into the peripheral wall portion, and flows from the gas outflow surface to the outside of the peripheral wall portion. Here, in the filter wire forming the peripheral wall portion, the groove portion is aligned opening toward the gas inflow surface side of the peripheral wall portion. Thus, a contact area in which the combustion gas is in contact with a surface of the filter wire in course of passing the combustion gas through the peripheral wall portion can be increased. Since the groove portion is oriented toward the gas inflow surface side of the peripheral wall portion as described above, the combustion gas that flows from the gas inflow surface can be smoothly guided to the groove portion of the filter wire. In this way, the combustion gas can pass through the peripheral wall portion of the filter molded article while repeatedly colliding with a recessed wall surface forming the groove portion of the filter wire. As a result, a combustion gas filtering effect and cooling effect by the filter molded article can be improved.

Further, the filter molded article according to the present disclosure includes the groove portion formed in one place in the circumferential direction of the filter wire, and includes the remaining region in the circumferential direction formed as the circumferential surface. Thus, a contact area of wire portions overlapping each other by winding the filter wire can be easily ensured. In this way, even when external force is applied to the peripheral wall portion of the filter molded article formed of the winding body of the filter wire, the filter wire is less likely to be unwound, and an occurrence of a loss of shape can be suppressed. Further, when the filter wire is manufactured, the groove portion may be formed in only one place in the circumferential direction of the metal wire, and thus the manufacturing of the filter wire is easy. As a result, the filter molded article having excellent shape retention (rigidity) and manufacturing ease can be provided.

Here, the groove portion may continuously extend from one end to an other end in an extending direction of the filter wire.

Further, the inner peripheral surface of the peripheral wall portion may be formed as the gas inflow surface, and the outer peripheral surface may be formed as the gas outflow surface, and the groove portion may be oriented inward in a radial direction of the peripheral wall portion.

Further, a groove edge portion located at a boundary portion between the circumferential surface and the groove portion may have a curved shape in a transverse cross-section of the filter wire.

Further, wire portions of the filter wire that are stacked in the radial direction of the peripheral wall portion may be sintered with each other.

Further, the technology of the present disclosure can also be determined as a gas generator including: an outer shell container; and the filter molded article according to any of the descriptions above housed in the outer shell container.

### Advantageous Effects of Invention

The present disclosure can provide a technology related to a filter molded article for a gas generator having excellent combustion gas filtering and cooling effects and also having more excellent shape retention and manufacturing ease than found in the related art.

### Brief Description of Drawings

FIG. 1 is a diagram schematically illustrating an internal structure of a gas generator according to a first embodiment.
FIG. 2 is a top view of a filter molded article according to the first embodiment.
FIG. 3 is a diagram illustrating a transverse cross-section of a filter wire according to the first embodiment.
FIG. 4 is a diagram (1) illustrating an example of a method for manufacturing the filter wire according to the first embodiment.
FIG. 5 is a diagram (2) illustrating an example of the method for manufacturing the filter wire according to the first embodiment.
FIG. 6 is a diagram (3) illustrating an example of the method for manufacturing the filter wire according to the first embodiment.
FIG. 7 is a diagram (4) illustrating an example of the method for manufacturing the filter wire according to the first embodiment.
FIG. 8 is a diagram schematically illustrating a relationship between an opening direction of a groove portion in the filter wire according to the first embodiment, and a flow direction of combustion gas that passes through a peripheral wall portion.
FIG. 9 is a diagram illustrating a transverse cross-section of a filter wire according to a first modified example of the first embodiment.
FIG. 10 is a diagram schematically illustrating a part of a longitudinal cross-section of a peripheral wall portion formed by winding the filter wire according to the first modified example of the first embodiment.
FIG. 11 is a diagram illustrating a transverse cross-section of a filter wire according to a second modified example of the first embodiment.
FIG. 12 is a diagram illustrating a transverse cross-section of a filter wire according to a third modified example of the first embodiment.

### Description of Embodiments

A filter molded article and a gas generator including the filter molded article according to an embodiment of the present disclosure will be described below with reference to the drawings. Note that each of the configurations, combinations thereof, and the like in each embodiment is an example, and various additions to the configuration, omissions, substitutions, and other changes may be made as appropriate without departing from the spirit of the present invention. The present disclosure is not limited by the embodiments and is limited only by the claims.

### First Embodiment

### Overall Configuration

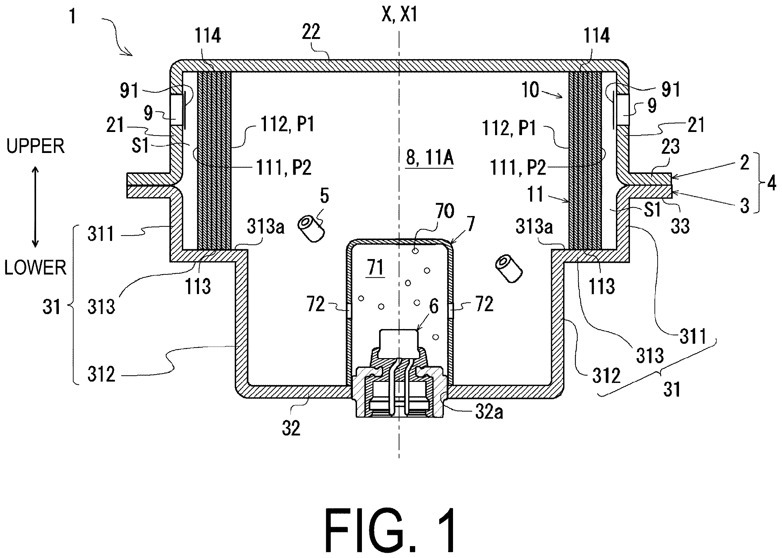

FIG. 1 is a diagram schematically illustrating an internal structure taken along a center axis X of a gas generator 1 according to a first embodiment. Hereinafter, a cross-section taken along the center axis X of the gas generator 1 as illustrated in FIG. 1 may be referred to as a "longitudinal cross-section" of the gas generator 1. Further, a direction along the center axis X of the gas generator 1 may be referred to as an "top-and-bottoom direction" of the gas generator 1. Further, FIG. 1 illustrates a state of the gas generator 1 before actuation. Further, the gas generator 1 is, for example, an airbag gas generator for supplying an airbag with gas for expanding and inflating the airbag.

The gas generator 1 is configured to burn a gas generating agent 5 filling a housing 4 formed of an upper shell 2 and a lower shell 3, and to discharge combustion gas. The housing 4 is an example of an outer shell container of the gas generator 1. The upper shell 2 in the housing 4 includes an upper peripheral wall portion 21 having a cylindrical shape, and a top plate portion 22 that closes an upper end of the upper peripheral wall portion 21. In the upper shell 2, the top plate portion 22 has a substantially circular shape in a plan view, and a lower end portion of the upper peripheral wall portion 21 is formed as an open end. Further, a joining portion 23 extending outward in a radial direction in a flange shape is connected to the lower end portion of the upper peripheral wall portion 21 in the upper shell 2.

The lower shell 3 in the housing 4 includes a lower peripheral wall portion 31 having a cylindrical shape, and a bottom plate portion 32 that closes a lower end of the lower peripheral wall portion 31 and to which an igniter 6 is fixed. In the lower shell 3, the bottom plate portion 32 has a substantially circular shape in the plan view, and an upper end portion of the lower peripheral wall portion 31 is formed as an open end. Further, a joining portion 33 extending outward in the radial direction in a flange shape is connected to the upper end portion of the lower peripheral wall portion 31. Note that a known igniter can be used as the igniter 6.

As illustrated in FIG. 1, the lower peripheral wall portion 31 of the lower shell 3 is formed of a first tubular wall portion 311, a second tubular wall portion 312, and a connecting wall portion 313 that connects the first tubular wall portion 311 and the second tubular wall portion 312. The first tubular wall portion 311 is a tubular portion including the upper end portion of the lower peripheral wall portion 31 and is formed to have substantially the same diameter as the upper peripheral wall portion 21. The second tubular wall portion 312 is a tubular portion including a lower end portion of the lower peripheral wall portion 31, and has a diameter smaller than that of the first tubular wall portion 311. The connecting wall portion 313 is a portion that has an annular shape and connects a lower end portion of the first tubular wall portion 311 and an upper end portion of the second tubular wall portion 312. The joining portion 23 of the upper shell 2 and the joining portion 33 of the lower shell 3 formed as described above are joined by laser welding or the like while overlapping each other as illustrated in FIG. 1. In this way, the housing 4 having a cylindrical shape with both ends in an axial direction (top-and-bottom direction) closed is formed. However, a shape of the upper shell 2 and the lower shell 3 in the housing 4 is not limited to an aspect illustrated FIG. 1.

Further, as illustrated in FIG. 1, the igniter 6 is disposed in an internal space of the housing 4. More specifically, an attachment hole 32a for fixing the igniter 6 is formed in a center portion in the bottom plate portion 32 of the lower shell 3, and the igniter 6 is fixed to the bottom plate portion 32 via a resin in a state where the igniter 6 is inserted into the lower shell 3 from the attachment hole 32a.

Further, as illustrated in FIG. 1, an inner tubular member 7 is provided inside the housing 4. The inner tubular member 7 is fixed to the bottom plate portion 32 of the lower shell 3. Further, the inner tubular member 7 has a cup shape, and a housing portion 71 that houses a known transfer charge 70 therein is formed. As illustrated in FIG. 1, the igniter 6 is disposed and faces the housing portion 71 formed inside the inner tubular member 7. Further, a combustion chamber 8 that houses the gas generating agent 5 is formed around the inner tubular member 7. Furthermore, the inner tubular member 7 is provided with a communication hole 72 that communicates the housing portion 71 that houses the transfer charge 70 and the combustion chamber 8. Note that the communication hole 72 in the inner tubular member 7 is closed by an appropriate sealing tape or the like, and the housing portion 71 of the inner tubular member 7 and the combustion chamber 8 may be isolated from each other before the gas generator 1 is actuated.

Further, as illustrated in FIG. 1, a gas discharge port 9 for discharging the combustion gas generated by combustion of the gas generating agent 5 to the outside is provided in the upper peripheral wall portion 21 in the upper shell 2. An installation aspect such as a number, a position, and a size of the gas discharge port 9 is not particularly limited, but a plurality of the gas discharge ports 9 may be arranged along a circumferential direction of the upper peripheral wall portion 21, for example. Further, the gas discharge port 9 is closed by a sealing tape 91, and is configured to suppress entry of moisture from the outside into the housing 4 before the gas generator 1 is actuated.

Furthermore, the gas generator 1 includes a filter molded article 10 housed in the housing 4. The filter molded article 10 is disposed between the combustion chamber 8 inside the housing 4 and the gas discharge port 9. The filter molded article 10 is a member for cooling the combustion gas generated by the combustion of the gas generating agent 5 when the gas generator 1 is actuated, and filtering and cooling the combustion gas by trapping combustion residue contained in the combustion gas.

The filter molded article 10 in the present embodiment includes a peripheral wall portion 11 molded into a cylindrical shape by winding a metal filter wire into multiple layers. A reference sign 111 illustrated in FIG. 1 indicates an outer peripheral surface of the peripheral wall portion 11, and a reference sign 112 indicates an inner peripheral surface of the peripheral wall portion 11. The peripheral wall portion 11 of the filter molded article 10 has an outer diameter smaller than an inner diameter of the first tubular wall portion 311 of the lower shell 3 and the upper peripheral wall portion 21 of the upper shell 2, and an annular (doughnut-shaped) gap portion S1 is formed between the first tubular wall portion 311 of the lower shell 3 and the upper peripheral wall portion 21 of the upper shell 2, and the peripheral wall portion 11. In other words, in the example illustrated in FIG. 1, the outer peripheral surface 111 of the peripheral wall portion 11 in the filter molded article 10 is disposed and faces the first tubular wall portion 311 of the lower shell 3 and the upper peripheral wall portion 21 of the upper shell 2 across the gap portion S1. Further, a part of the combustion chamber 8 is disposed in a hollow portion formed inside the peripheral wall portion 11, and thus the inner peripheral surface 112 of the peripheral wall portion 11 is disposed and faces the combustion chamber 8. In the filter molded article 10 disposed inside the housing 4 as described above, the inner peripheral surface 112 of the peripheral wall portion 11 functions as a gas inflow surface P1 through which gas flows into the peripheral wall portion 11, and the outer peripheral surface 111 functions as a gas outflow surface P2 through which the gas flows from the peripheral wall portion 11. Further, the filter molded article 10 is assembled in the housing 4 in a state where a lower end surface 113 and an upper end surface 114 of the peripheral wall portion 11 are respectively in contact with the connecting wall portion 313 of the lower shell 3 and the top plate portion 22 of the upper shell 2 and are compressed in the axial direction (top-and-bottom direction) of the peripheral wall portion 11.

### Operation

The gas generator 1 formed as described above burns the transfer charge 70 housed in the housing portion 71 of the inner tubular member 7 by the igniter 6 being actuated when the airbag is required to expand and inflate as in a vehicle collision or the like, for example. For example, the igniter 6 may be configured to house an ignition charge inside a housing cup, burn the ignition charge during actuation, and thus discharge flame, high-temperature gas, or the like being a combustion product of the ignition charge to the outside of the housing cup. In this way, the transfer charge 70 in the housing portion 71 ignites, and the combustion gas of the transfer charge 70 breaks the seal tape closing the communication hole 72 of the inner tubular member 7, and is discharged from the communication hole 72 to the combustion chamber 8. As a result, the combustion gas of the transfer charge 70 comes into contact with the gas generating agent 5 housed in the combustion chamber 8, and the gas generating agent 5 burns, thereby generating the combustion gas having high temperature and high pressure in the combustion chamber 8.

Then, the combustion gas generated in the combustion chamber 8 as described above flows from the inner peripheral surface 112 (gas inflow surface P1) of the filter molded article 10 into the peripheral wall portion 11 and is cooled when passing through the peripheral wall portion 11 outward in the radial direction, and the combustion residue is trapped. The combustion gas passing through the peripheral wall portion 11 in such a manner flows from the outer peripheral surface 111 (gas outflow surface P2) to the gap portion S1, then breaks the sealing tape 91 closing the gas discharge port 9 by pressure of the combustion gas, and is discharged from the gas discharge port 9 to the outside of the housing 4. The combustion gas discharged from the gas discharge port 9 of the housing 4 in such a manner is supplied to the airbag via an appropriate supply pipe or the like (not illustrated), and can thus expand and inflate the airbag.

### Detailed Structure of Filter

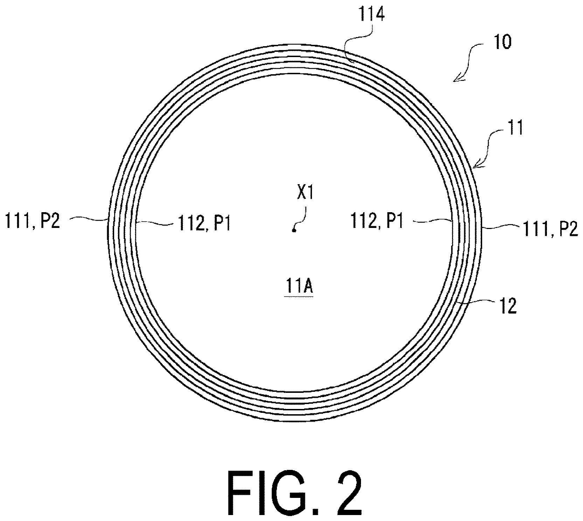

Next, a detailed structure of the filter molded article 10 according to the present embodiment will be described. FIG. 2 is a top view of the filter molded article 10 according to the first embodiment. A reference sign 12 indicates a filter wire forming the peripheral wall portion 11 of the filter molded article 10. The peripheral wall portion 11 of the filter molded article 10 is formed as a substantially cylindrical hollow winding body manufactured by winding the filter wire 12 along a circumferential direction of the peripheral wall portion 11 into multiple layers. Note that the number of times that the filter wire 12 forming the peripheral wall portion 11 is wound around is not particularly limited.

The peripheral wall portion 11 of the filter molded article 10 includes a hollow portion 11A extending along a center axis X1 direction (hereinafter, also simply referred to as an "axial direction") of the filter molded article 10 illustrated in FIG. 2, and the hollow portion 11A forms at least a part of the combustion chamber 8 that houses the gas generating agent 5. Note that the filter molded article 10 is disposed in the housing 4, and the center axis X1 of the filter molded article 10 is coaxial with the center axis X of the gas generator 1.

The filter wire 12 forming the peripheral wall portion 11 of the filter molded article 10 is wound layered along the circumferential direction of the filter molded article 10 (peripheral wall portion 11). In this way, the peripheral wall portion 11 has a structure in which the filter wire 12 is stacked in a multilayer shape along the radial direction of the peripheral wall portion 11. For example, the filter wire 12 is wound in an oblique direction and extends crossing both the circumferential direction and the axial direction of the peripheral wall portion 11 of the filter molded article 10, with a winding direction of the filter wire 12 turning at one end portion (upper end portion) in the axial direction and an other end portion (lower end portion) in the axial direction, whereby the filter wire 12 has a mesh shape. However, the aspect of winding the filter wire 12 is not limited to the aspect described above. Further, the peripheral wall portion 11 of the filter molded article 10 may be formed of one filter wire 12, or may be formed of a plurality of the filter wires 12.

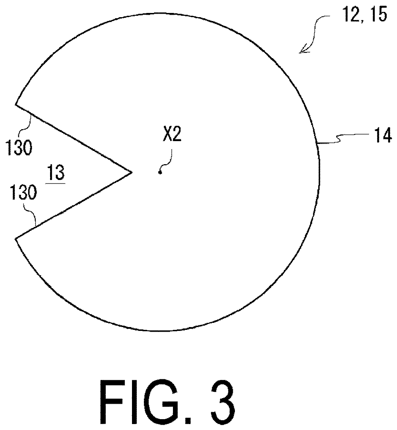

Here, FIG. 3 is a diagram illustrating a transverse cross-section of the filter wire 12 according to the first embodiment. Note that the transverse cross-section of the filter wire 12 is a cross-section in a direction orthogonal to a center axis X2 in which the filter wire 12 extends. The filter wire 12 is formed by processing a metal wire 15 having a circular or elliptical transverse cross-section. A material of the metal wire 15 forming the filter wire 12 is not particularly limited, but examples include copper plated steel, stainless steel, steel, a nickel alloy, iron, and the like.

The filter wire 12 illustrated in FIG. 3 includes a groove portion 13 formed in one place in a circumferential direction of the metal wire 15 having a circular transverse cross-section, and has a cross-sectional structure in which a circumferential surface 14 is formed in a remainder in the circumferential direction, that is, in a portion other than the groove portion 13. An outer surface of the filter wire 12 in the present embodiment is formed of a recessed wall surface 130 forming the groove portion 13, and the circumferential surface 14. The circumferential surface 14 of the filter wire 12 is, for example, a portion in which a circular or elliptical original shape of the metal wire 15 forming the filter wire 12 is maintained whole. On the other hand, the groove portion 13 of the filter wire 12 is a recessed portion that opens to a surface of the metal wire 15 and extends in a groove shape along an extending direction (center axis X2 direction) of the metal wire 15. The filter wire 12 illustrated in FIG. 3 is the metal wire 15 of which an original shape is a circular transverse cross-section, and has a cross-sectional shape in which one place in the circumferential direction of the metal wire 15 is notched by the groove portion 13, which has a V shape. However, a position, a shape, a size, and the like of the groove portion 13 illustrated in FIG. 3 are not particularly limited.

Further, the filter wire 12 in the present embodiment may include the groove portion 13 formed in one place in a circumferential direction of a metal wire having an elliptical transverse cross-section, and may include the circumferential surface 14 formed in a portion other than the groove portion 13 in the circumferential direction of the metal wire. As described above, the filter wire 12 in the present embodiment has a configuration in which the groove portion 13 formed in one place in the circumferential direction of the metal wire 15 having the circular or elliptical cross-section extends along the extending direction of the metal wire 15, and the circumferential surface 14 is formed in the portion other than the groove portion 13.

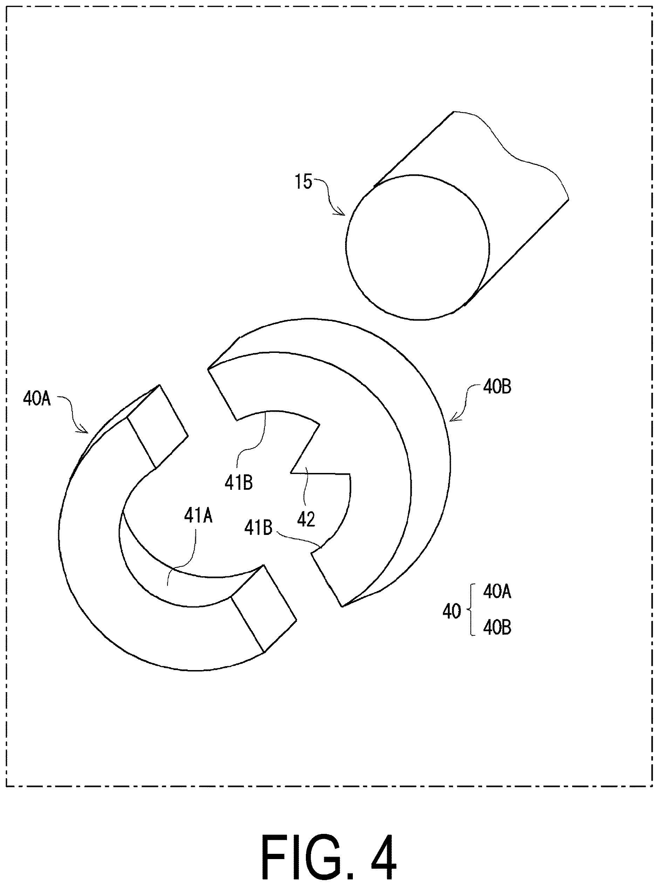

A method for manufacturing the filter wire 12 forming the filter molded article 10 is not particularly limited, but the filter wire 12 may be manufactured by preparing the metal wire 15 having the circular or elliptical transverse cross-section, and pressing a die member against the metal wire 15 to form the groove portion 13 along the extending direction of the metal wire 15, for example. FIGS. 4 to 7 are diagrams illustrating an example of the method for manufacturing the filter wire 12 according to the first embodiment. In the manufacturing of the filter wire 12, first, the metal wire 15 before processing and a molding die 40 are prepared as illustrated in FIG. 4. Here, an example of manufacturing the filter wire 12 by processing the metal wire 15 having the circular transverse cross-section will be described. The molding die 40 illustrated in FIG. 4 is divided into two members of a first die member 40A and a second die member 40B.

A first circumferential curved surface portion 41A formed as an arc-shaped curved surface is provided in the first die member 40A. On the other hand, a second circumferential curved surface portion 41B formed as an arc-shaped curved surface having the same radius of curvature as that of the first circumferential curved surface portion 41A, and a groove forming protrusion portion 42 are provided in the second die member 40B. The groove forming protrusion portion 42 is a protrusion for forming the groove portion 13 in the filter wire 12, and has a shape corresponding to the groove portion 13. Here, an example of manufacturing the filter wire 12 including the groove portion 13 having a V shape as illustrated in FIG. 3 is described, and thus the groove forming protrusion portion 42 is also formed having the V shape in the second die member 40B illustrated in FIG. 4.

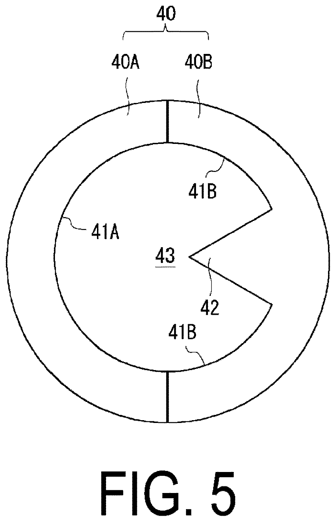

FIG. 5 is a front view of a state where the first die member 40A and the second die member 40B are combined. In the front view of the state where the first die member 40A and the second die member 40B are combined, a shape of a hole 43 formed in a region surrounded by the first circumferential curved surface portion 41A, the second circumferential curved surface portion 41B, and the groove forming protrusion portion 42 is the same shape as the transverse cross-section of the filter wire 12 illustrated in FIG. 3.

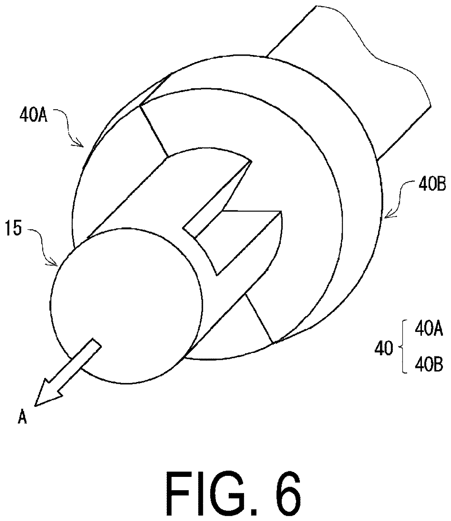

Here, the groove forming protrusion portion 42 of the second die member 40B is pressed into the surface of the metal wire 15 by an appropriate mechanical means, and the first die member 40A and the second die member 40B are combined as illustrated in FIG. 6. From this state, for example, the metal wire 15 is pulled out in a direction of an arrow A illustrated in FIG. 6 while the molding die 40 including the combination of the first die member 40A and the second die member 40B is fixed. As a result, the groove portion 13 having the same shape as that of the groove forming protrusion portion 42 of the second die member 40B is formed in the surface of the metal wire 15 along the extending direction (axial direction) of the metal wire 15. By processing the metal wire 15 in such a manner, the filter wire 12 including the groove portion 13 in one place in the circumferential direction as illustrated in FIG. 3 can be manufactured. Note that, in FIG. 6, instead of pulling out the metal wire 15 in one direction while the molding die 40 is fixed, the molding die 40 may be moved along the extending direction (axial direction) of the metal wire 15 while the metal wire 15 is fixed. With such a technique, the filter wire 12 in the present embodiment can also be suitably manufactured.

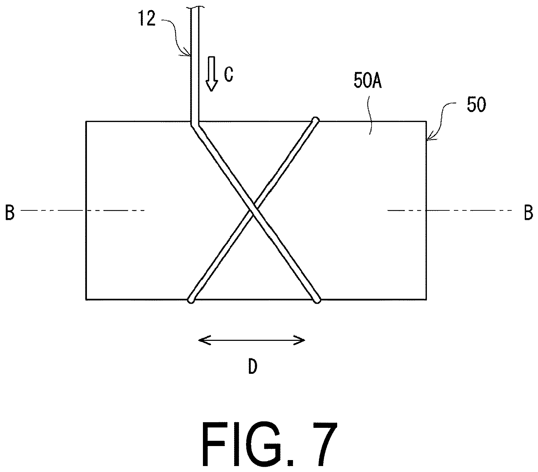

When the filter wire 12 manufactured as described above is wound, for example, one end of the filter wire 12 is fixed to a predetermined position of a core material 50 having a columnar shape as illustrated in FIG. 7, and the core material 50 is rotated along a rotating shaft B in this state, and thus the filter wire 12 is wound around an outer peripheral surface 50A of the core material 50 while being supplied to the core material 50 along an arrow C direction. At this time, the filter wire 12 may be wound oblique to the core material 50 by reciprocating, along an arrow D direction illustrated in FIG. 7, a position of the filter wire 12 supplied to the core material 50 with respect to a rotating shaft B direction of the core material 50. Furthermore, in the present embodiment, when the filter wire 12 is wound around the core material 50, the filter wire 12 is supplied to the core material 50 with the groove portion 13 of the filter wire 12 facing the outer peripheral surface 50A side of the core material 50. In this way, the filter wire 12 can be wound in a state where the groove portion 13 of the filter wire 12 is aligned facing the outer peripheral surface 50A side of the core material 50. After the winding of the filter wire 12 around the core material 50 ends, the filter wire 12 is cut, and the core material 50 is removed from the obtained cylindrical winding body. The winding body manufactured in such a manner may be then subjected to heat treatment for sintering, and wire portions overlapping each other on the filter wire 12 may be heated to be integral.

The filter molded article 10 obtained as described above includes the groove portion 13 formed in one place in the circumferential direction of the metal wire 15 having the circular or elliptical transverse cross-section, with the groove portion 13 extending along the extending direction of the metal wire 15. Furthermore, the filter molded article 10 includes the circumferential surface 14 formed in the portion other than the groove portion 13. Then, the filter molded article 10 is assembled in the housing 4 in a state where the lower end surface 113 and the upper end surface 114 of the peripheral wall portion 11 are respectively in contact with the connecting wall portion 313 of the lower shell 3 and the top plate portion 22 of the upper shell 2, and the whole filter molded article 10 is compressed in the axial direction (top-and-bottom direction) as described above.

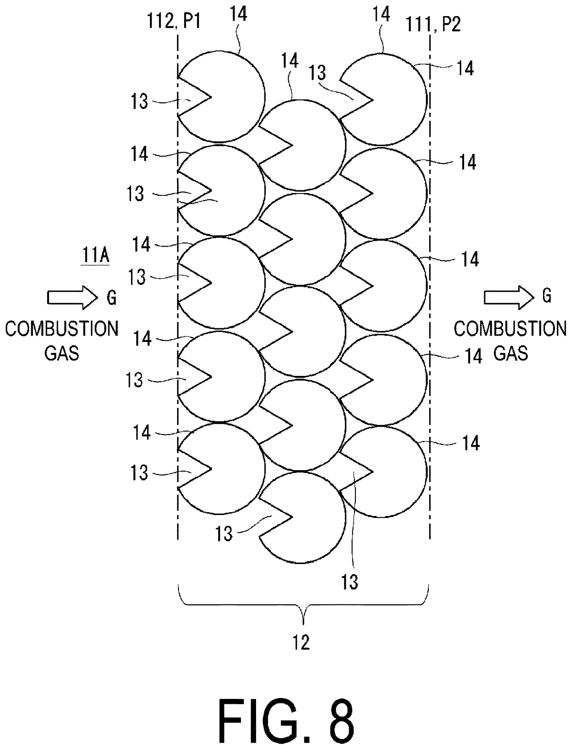

Here, FIG. 8 is a diagram schematically illustrating a relationship between an opening direction of the groove portion 13 in the filter wire 12 forming the filter molded article 10 according to the first embodiment, and a flow direction G of the combustion gas that passes through the peripheral wall portion 11. As illustrated in FIG. 8, the groove portion 13 extending along the extending direction of the filter wire 12 is oriented opening toward the gas inflow surface P1 (in the present embodiment, the inner peripheral surface 112) side of the peripheral wall portion 11. Further, in the present embodiment, the groove portion 13 in the filter wire 12 forming the filter molded article 10 (peripheral wall portion 11) continuously extends from one end to an other end in the extending direction of the filter wire 12. Note that, for the sake of illustration, FIG. 8 illustrates a situation where the filter wire 12 forming the peripheral wall portion 11 is wound around three times, but the number of times that the filter wire 12 is actually wound around is not particularly limited.

According to the filter molded article 10 formed as described above, the groove portion 13 is aligned facing toward the gas inflow surface P1 (inner peripheral surface 112) side of the peripheral wall portion 11. In this way, in a gas path in which the combustion gas flows from the gas inflow surface P1 (inner peripheral surface 112) into the peripheral wall portion 11 and flows from the gas outflow surface P2 (outer peripheral surface 111), a contact area in which the combustion gas is in contact with a surface of the filter wire 12 can be further increased than that in a filter molded article manufactured by using a filter wire having a smooth surface (without the groove 13 being formed). Further, since each groove portion 13 of the filter wire 12 is aligned opening toward the gas inflow surface P1 (inner peripheral surface 112) side, the filter molded article 10 can smoothly guide, to the groove portion 13 of the filter wire 12, the combustion gas that flows from the gas inflow surface P1 (inner peripheral surface 112) into the peripheral wall portion 11. In this way, the combustion gas can pass through the peripheral wall portion 11 while repeatedly colliding with the recessed wall surface 130 (see FIG. 3) forming the groove portion 13 of the filter wire 12. As a result, by efficiently trapping the combustion residue contained in the combustion gas, a filtering effect can be improved, and a cooling effect of the combustion gas can be improved.

Here, the groove portion 13 of the filter wire 12 is formed in a recessed shape being recessed from the circumferential surface 14 to the center axis side of the filter wire 12, but a proportion of the circumferential surface 14 in the entire peripheral surface (circumferential direction) of the filter wire 12 is great. Thus, when the filter wire 12 is wound, a contact area in which overlapping wire portions are in contact with each other is increased. Then, the circumferential surface 14 of the filter wire 12 contributes to ensuring of an area (hereinafter, referred to as a "sintering area") in which the overlapping wire portions are sintered with each other in the filter wire 12. On the other hand, for example, in the case of a bent flat plate shape as in the filter wire disclosed in Patent Document 1, edge portions in a transverse cross-section of the filter wire tend to be in a line contact or a point contact. As a result, there is a concern that the contact area of overlapping wire portions is small. Further, when a plurality of protrusions (protruding portions) are formed in a circumferential direction of a filter wire as in the filter wire disclosed in Patent Document 2, the filter wire is wound in an aspect where the protrusions of the filter wire are in contact with each other, and there is a concern that the contact area of overlapping wire portions is small. As a result, in a known filter molded article, a sintering area of a wound filter wire may become insufficient, a shape may be lost when external force is applied to the filter molded article, and the filter wire may be easily unwound.

In contrast, in the filter molded article 10 in the present embodiment, the groove portion 13 is formed only in one place (single place) in the circumferential direction of the filter wire 12, and the circumferential surface 14, in which the original shape of the metal wire 15 forming the filter wire 12 is maintained whole, is formed in the remaining region in the circumferential direction. In this way, the contact area of wire portions overlapping each other by winding the filter wire 12 is easily ensured, and the sintering area of the wires can be sufficiently ensured. As a result, even when the external force is applied to the filter molded article 10, the filter wire 12 is less likely to be unwound, and an occurrence of a loss of shape can be suppressed. For example, even when the filter molded article 10 is compressed in the axial direction (top-and-bottom direction) by the lower shell 3 and the upper shell 2 during assembly of the filter molded article 10 into the housing 4, an occurrence of a loss of shape in the filter molded article 10 and unwinding of the filter wire 12 can be suitably suppressed due to high shape retention (rigidity) of the filter molded article 10.

Further, in the filter molded article described in Patent Document 1, the filter wire needs to be rolled and processed into a bent plate shape having a V-shaped transverse cross-section during manufacturing. Further, since the filter wire having the bent plate shape formed in such a manner has great resistance to winding, it cannot be said that the filter molded article has an excellent manufacturing property. In contrast, according to the filter molded article 10 in the present embodiment, by only forming the groove portion 13 in only one place in the circumferential direction of the metal wire 15 forming the filter wire 12, the original shape (that is, the circular or elliptical shape) of the metal wire 15 is maintained in the remaining circumferential surface 14. Thus, manufacturing ease is excellent. As described above, according to the present embodiment, the filter molded article 10 having more excellent shape retention (rigidity) and manufacturing ease than found in the related art can be provided.

Furthermore, in the filter molded article 10 in the present embodiment, the groove portion 13 of the filter wire 12 continuously extends from one end to an other end in the extending direction of the filter wire 12. In this way, the combustion gas filtering effect and cooling effect in the filter molded article 10 can be further improved. However, in the filter wire 12 in the filter molded article 10, the groove portion 13 may not continuously extend across the entire section in the extending direction. For example, the groove portion 13 may be disposed and intermittently extend along the extending direction of the filter wire 12.

Furthermore, in the filter wire 12 of the filter molded article 10, the wire portions stacked (overlapping) in the radial direction of the peripheral wall portion 11 are sintered with each other. According to the configuration, the filter wire 12 after molding into the cylindrical shape is less likely to be unwound, and the shape retention (rigidity) of the filter molded article 10 can be further improved.

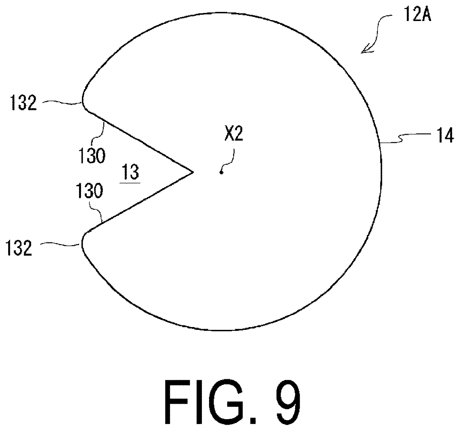

Here, FIG. 9 is a diagram illustrating a transverse cross-section of a filter wire 12A according to a first modified example of the first embodiment. In the filter wire 12A according to the first modified example, a groove edge portion 132 located at a boundary portion between the circumferential surface 14 and the groove portion 13 has a curved shape in the transverse cross-section of the filter wire 12A. In the example illustrated in FIG. 9, the groove portion 13 has a V shape, and the groove edge portion 132 of the groove portion 13 has a round shape.

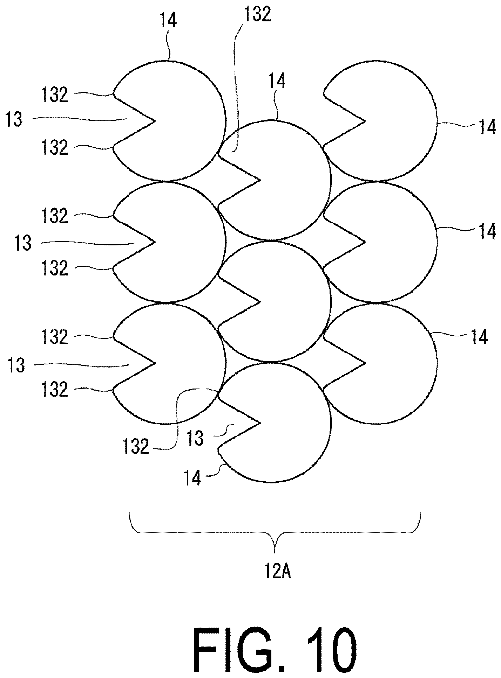

FIG. 10 is a diagram schematically illustrating a part of a longitudinal cross-section of the peripheral wall portion 11 formed by winding the filter wire 12A according to the first modified example. As illustrated in FIG. 10, the filter wire 12A is wound, and thus the groove edge portion 132 in the groove portion 13 of the filter wire 12A is in contact with the circumferential surface 14 of the filter wire 12A overlapping in the radial direction of the peripheral wall portion 11. The groove edge portion 132 in the groove portion 13 has a curved shape (round shape) as in the filter wire 12A according to the present modified example. Thus, a suitable contact relationship between the circumferential surface 14 in a wire portion adjacent in the radial direction of the peripheral wall portion 11, and the groove edge portion 132 in the groove portion 13 can be obtained. In this way, the contact area of overlapping wire portions on the filter wire 12A can be further increased. As a result, the sintering area of the filter wire 12A can be further increased, and the shape retention of the filter molded article 10 can be more suitably improved.

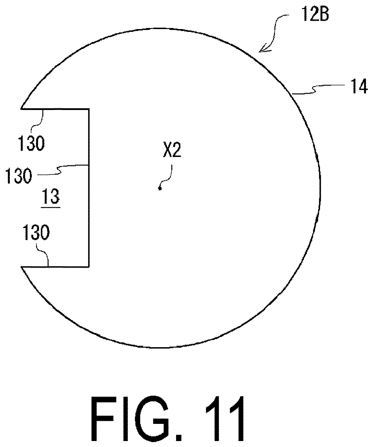

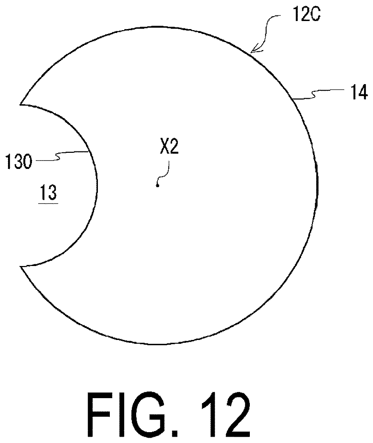

Here, FIG. 11 is a diagram illustrating a transverse cross-section of a filter wire 12B according to a second modified example of the first embodiment. FIG. 12 is a diagram illustrating a transverse cross-section of a filter wire 12C according to a third modified example of the first embodiment. The filter wire 12B illustrated in FIG. 11 includes the groove portion 13 having a rectangular shape. Further, the filter wire 12C illustrated in FIG. 12 includes the groove portion 13 having a circular shape. In this way, in the present embodiment, a shape of the groove portion 13 is not particularly limited. Further, in the filter wires 12B and 12C illustrated in FIGS. 11 and 12, a groove edge portion of the groove portion 13 may have a curved shape as described in FIG. 9.

Furthermore, the gas generator to which the filter molded article 10 in the present embodiment is applied is not limited to the gas generator 1 illustrated in FIG. 1, and can be applied to various gas generators. For example, in the gas generator 1 illustrated in FIG. 1, the gas generating agent 5 is disposed in the hollow portion 11A in the filter molded article 10, but limitation to such an aspect is not intended. For example, the filter molded article 10 may be incorporated into the housing 4, and thus and the hollow portion 11A in the filter molded article 10 may be formed as a space through which the combustion gas generated by the combustion of the gas generating agent 5 flows. Further, in the embodiment described above, the aspect in which the inner peripheral surface 112 of the peripheral wall portion 11 in the filter molded article 10 is set as the gas inflow surface P1 and the outer peripheral surface 111 of the peripheral wall portion 11 is set as the gas outflow surface P2 is described as an example, but no such limitation is intended. In other words, depending on a specification of the gas generator to which the filter molded article 10 is applied, the gas inflow surface P1 of the peripheral wall portion 11 in the filter molded article 10 may be formed of the outer peripheral surface 111, and the gas outflow surface P2 of the peripheral wall portion 11 may be formed of the inner peripheral surface 112. As a matter of course, in the case of this aspect, the groove portion 13 of the filter wire 12 may be oriented opening toward the outer peripheral surface 111 forming the gas inflow surface P1 of the peripheral wall portion 11. As a result, the filter molded article 10 having excellent combustion gas filtering and cooling effects and also having more excellent shape retention (rigidity) and manufacturing ease can be provided.

As described above, each embodiment disclosed in the present specification can be combined with any of the other features disclosed herein.

### Reference Signs List

1 Gas generator
2 Upper shell
3 Lower shell
4 Housing
5 Gas generating agent
10 Filter molded article
11 Peripheral wall portion
12 Filter wire
13 Groove portion
14 Circumferential surface
15 Metal wire

## Claims

1. A filter molded article (10) for a gas generator that is housed in an outer shell container of the gas generator, the filter molded article, comprising:
a peripheral wall portion (11) that is formed of a winding body of a filter wire (12) and has a cylindrical hollow shape, the filter wire including a groove portion (13) that is formed in one place in a circumferential direction of a metal wire having a circular or elliptical transverse cross-section and that extends along an extending direction of the metal wire, and including a circumferential surface formed in a portion other than the groove portion;
a gas inflow surface (112) that is formed of one surface from among an inner peripheral surface of the peripheral wall portion and an outer peripheral surface of the peripheral wall portion, and that is through which gas flows into the peripheral wall portion; and
a gas outflow surface (111) that is formed of the other surface from among the inner peripheral surface of the peripheral wall portion and the outer peripheral surface of the peripheral wall portion, and that is through which gas flows from the peripheral wall portion, wherein
the groove portion (13) is oriented so as to open toward the gas inflow surface in the peripheral wall portion.

2. The filter molded article according to claim 1, wherein
the groove portion (13) continuously extends from one end to an other end in an extending direction of the filter wire.

3. The filter molded article according to claim 1 or 2, wherein
the inner peripheral surface (112) of the peripheral wall portion is formed as the gas inflow surface, and the outer peripheral surface is formed as the gas outflow surface, and
the groove portion (13) is oriented inward in a radial direction of the peripheral wall portion.

4. The filter molded article according to any one of claims 1 to 3, wherein
a groove edge portion (132) located at a boundary portion between the circumferential surface and the groove portion has a curved shape in a transverse cross-section of the filter wire.

5. The filter molded article according to any one of claims 1 to 4, wherein
wire portions of the filter wire that are stacked in the radial direction of the peripheral wall portion are sintered with each other.

6. A gas generator (1), comprising:
an outer shell container; and
the filter molded article according to any one of claims 1 to 5 housed in the outer shell container.

## Patentansprüche

1. Ein Filterformartikel (10) für einen Gasgenerator, der in einem Außenschalenbehälter des Gasgenerators aufgenommen ist, wobei der Filterformartikel umfasst:
einen Peripheriewandabschnitt (11), der aus einem Wickelkörper eines Filterdrahtes (12) gebildet ist und eine zylindrische hohle Form aufweist, wobei der Filterdraht einen Nutabschnitt (13) enthält, der an einer Stelle in einer Umfangsrichtung eines Metalldrahtes mit einem kreisförmigen oder elliptischen Querschnitt gebildet ist und sich entlang einer Erstreckungsrichtung des Metalldrahtes erstreckt, und eine Umfangsfläche enthält, die in einem anderen Abschnitt als dem Nutabschnitt gebildet ist;
eine Gaseinströmfläche (112), die aus einer Fläche aus einer Innenperipheriefläche des Peripheriewandabschnitts und einer Außenperipheriefläche des Peripheriewandabschnitts gebildet ist und durch die Gas in den Peripheriewandabschnitt strömt; und
eine Gasausströmfläche (111), die aus der anderen Fläche aus der Innenperipheriefläche des Peripheriewandabschnitts und der Außenperipheriefläche des Peripheriewandabschnitts gebildet ist und durch die Gas aus dem Peripheriewandabschnitt strömt, wobei der Nutabschnitt (13) so orientiert ist, dass er sich in Richtung der Gaseinströmfläche in dem Peripheriewandabschnitt öffnet.

2. Der Filterformartikel nach Anspruch 1, wobei
der Nutabschnitt (13) sich kontinuierlich von einem Ende zu einem anderen Ende in einer Erstreckungsrichtung des Filterdrahtes erstreckt.

3. Der Filterformartikel nach Anspruch 1 oder 2, wobei
die Innenperipheriefläche (112) des Peripheriewandabschnitts als die Gaseinströmfläche ausgebildet ist, und die Außenperipheriefläche als die Gasausströmfläche ausgebildet ist, und
der Nutabschnitt (13) in einer radialen Richtung des Peripheriewandabschnitts nach innen orientiert ist.

4. Der Filterformartikel nach irgendeinem der Ansprüche 1 bis 3, wobei
ein Nutkantenabschnitt (132), der an einem Grenzabschnitt zwischen der Umfangsfläche und dem Nutabschnitt gelegen ist, in einem Querschnitt des Filterdrahtes eine gekrümmte Form aufweist.

5. Der Filterformartikel nach irgendeinem der Ansprüche 1 bis 4, wobei Drahtabschnitte des Filterdrahtes, die in der radialen Richtung des Peripheriewandabschnittes gestapelt sind, miteinander versintert sind.

6. Ein Gasgenerator (1), umfassend:
einen Außenschalenbehälter; und
den Filterformartikel nach irgendeinem der Ansprüche 1 bis 5, der in dem Außenschalenbehälter aufgenommen ist.

## Revendications

1. Article de filtre moulé (10) pour un générateur de gaz qui est logé dans un conteneur à coque externe du générateur de gaz, l'article de filtre moulé comprenant :
une portion de paroi périphérique (11) qui est formée par un corps d'enroulement d'un fil filtrant (12) et présente une forme creuse cylindrique, le fil filtrant comprenant une portion de rainure (13) qui est formée à un emplacement en direction circonférentielle d'un fil métallique ayant une section transversale circulaire ou elliptique et qui s'étend selon une direction d'extension du fil métallique, et comprenant une surface circonférentielle formée dans une portion autre que la portion de rainure ;
une surface d'entrée de gaz (112) qui est formée par une surface parmi une surface périphérique interne de la portion de paroi périphérique et une surface périphérique externe de la portion de paroi périphérique, et qui est celle à travers laquelle le gaz s'écoule dans la portion de paroi périphérique ; et
une surface de sortie de gaz (111) qui est formée par l'autre surface parmi la surface périphérique interne de la portion de paroi périphérique et la surface périphérique externe de la portion de paroi périphérique, et qui est celle à travers laquelle le gaz s'écoule depuis la portion de paroi périphérique, dans lequel
la portion de rainure (13) est orientée de manière à s'ouvrir vers la surface d'entrée de gaz dans la portion de paroi périphérique.

2. Article de filtre moulé selon la revendication 1, dans lequel
la portion de rainure (13) s'étend en continu d'une extrémité à une autre extrémité en direction d'extension du fil filtrant.

3. Article de filtre moulé selon la revendication 1 ou 2, dans lequel
la surface périphérique interne (112) de la portion de paroi périphérique est formée comme la surface d'entrée de gaz, et la surface périphérique externe est formée comme la surface de sortie de gaz, et
la portion de rainure (13) est orientée vers l'intérieur en direction radiale de la portion de paroi périphérique.

4. Article de filtre moulé selon l'une quelconque des revendications 1 à 3, dans lequel
une portion de bord de rainure (132) située à une portion de délimitation entre la surface circonférentielle et la portion de rainure présente une forme incurvée dans une section transversale du fil filtrant.

5. Article de filtre moulé selon l'une quelconque des revendications 1 à 4, dans lequel
des portions de fil du fil filtrant qui sont empilées en direction radiale de la portion de paroi périphérique sont frittées les unes avec les autres.

6. Générateur de gaz (1), comprenant :
un conteneur à coque externe ; et
l'article de filtre moulé selon l'une quelconque des revendications 1 à 5 logé dans le conteneur à coque externe.
